# FASCICULE DE BREVET EUROPEEN

(11) **EP 2 356 349 B1**
(45) Date de publication et mention de la délivrance du brevet: **05.09.2012**
(21) Numéro de dépôt: 09744367.5
(22) Date de dépôt: 21.10.2009
(51) Int. Cl.: F16D 55/2265, F16D 65/00

(54) **MANCHON POUR ÉTRIER DE FREIN À DISQUE ET FREIN À DISQUE MUNI D'UN TEL MANCHON**
HÜLSE FÜR EINEN SCHEIBENBREMSSATTEL UND MIT SOLCH EINER HÜLSE AUSGESTATTETE SCHEIBENBREMSE
SLEEVE FOR DISC BRAKE CALIPER AND DISC BRAKE FITTED WITH SUCH A SLEEVE

(30) Priorité: 13.11.2008 FR 0806312; 30.01.2009 FR 0900429
(43) Date de publication de la demande: 17.08.2011
(73) Titulaire: Robert Bosch GmbH, 70442 Stuttgart (DE)
(72) Inventeur: CHAMPION, Pascal, F-49240 Avrille (FR); VINCK, Jan, F-49250 Beaufort en Vallee (FR); NOCERA, Pascal, F-78400 Chatou (FR); LEMOINE, Eric, F-92600 Asnieres (FR)
(74) Mandataire: Hurwic, Aleksander Wiktor
(86) Numéro de dépôt international: PCT/EP2009/063799
(87) Numéro de publication internationale: WO 2010/054918

(56) Documents cités:
- WO-A-2005/124179
- WO-A-2009/059762
- DE-A1- 2 647 911
- DE-A1- 10 245 027
- GB-A- 2 156 924

## Description

La présente invention concerne un manchon pour un étrier de frein à disque et un frein à disque muni d'un tel manchon.

Un frein à disque de type connu comporte une chape fixée à un moyeu d'un véhicule automobile ainsi qu'un étrier monté coulissant dans la chape. Le frein à disque comporte également une première et une deuxième garnitures, ou plaquettes de frein, aptes à coopérer avec respectivement une première et une deuxième faces d'un disque de frein solidaire en rotation d'une roue.

Une plaquette, dite plaquette intérieure, est en appui contre une extrémité d'un piston hydraulique monté à coulissement dans l'étrier selon un axe parallèle à l'axe du disque de frein lors d'une application de freinage.

Par réaction, l'étrier coulisse par rapport à la chape pour appliquer la deuxième plaquette de frein sur la deuxième face du disque de frein.

Le coulissement de l'étrier par rapport à la chape est réalisé au moyen de deux bras, appelés colonnettes, s'étendant selon des axes parallèles à l'axe du piston hydraulique, fixés rigidement à l'étrier et coulissant respectivement dans un alésage pratiqué dans la chape.

Une colonnette est de manière connue cylindrique à section circulaire et munie à une extrémité d'un perçage taraudé aptes à coopérer avec une vis pénétrant dans un passage de l'étrier, pour solidariser la colonnette à l'étrier.

Des joints d'étanchéité raccordent l'étrier à la chape en entourant chaque colonnette de manière à préserver des salissures de la corrosion les surfaces de contact entre les colonnettes et les alésages de la chape.

Afin de guider le coulissement des colonnettes, il est connu de mettre en oeuvre un manchon - dénommé « bushing » en anglais - dans lequel coulisse la colonnette comme décrit, par exemple, dans la demande de brevet EP 1236923A2 ou GB 2 156 924 qui divulgue un manchon selon le préambule de la revendication 1.

Un tel manchon permet notamment d'amortir les vibrations basses fréquences générées par l'étrier lors d'un freinage et hors freinage. Cet amortissement est d'autant plus efficace que l'effort exercé par le manchon sur la chape est important, ce qui est favorisé par une surface de contact entre le manchon et la chape importante.

La présente invention résulte de la constatation que le retour du frein dans une position de repos est d'autant plus rapide que la surface de contact entre le manchon et la chape est réduite, de façon à favoriser le coulissement de la colonnette.

Dès lors, un compromis relatif à la surface de contact entre la chape et le manchon est nécessaire afin d'assurer, d'une part, un amortissement satisfaisant des vibrations basses fréquences et, d'autre part, un retour rapide de la colonnette en position de repos.

La présente invention vise à remédier à cet inconvénient. À cet effet, elle concerne un manchon pour frein à disque muni d'un étrier monté coulissant dans une chape au moyen de colonnettes fixées rigidement à l'étrier, ce manchon étant destiné à recevoir une de ces colonnettes dans un alésage de la chape, le manchon présentant des nervures sur une surface destinée à être en contact avec la chape de telle sorte que ces nervures se déforment afin d'accroître cette surface de contact lorsque le manchon est compressé par une activation du frein.

Un tel manchon permet d'obtenir un amortissement satisfaisant des vibrations basses fréquences lorsque le frein est mis en oeuvre. De fait, dans ce cas, la surface de contact accrue entre le manchon et la chape permet un tel amortissement

En outre, un tel manchon permet d'obtenir un rapide retour de la colonnette dans une position de repos puisque, lorsque le frein est relâché, la surface de contact du manchon avec la chape diminue, ce qui diminue également les forces de résistance au retour de la colonnette en position de repos.

Selon l'invention, le manchon présente une forme sensiblement cylindrique selon un axe longitudinal et les nervures ont des formes trapézoïdales allongées selon l'axe longitudinal du manchon. Le manchon présente différentes nervures ayant différentes hauteurs mesurées selon une direction perpendiculaire à l'axe longitudinale du manchon.

Selon une réalisation, le manchon comprend au moins cinq nervures de même hauteur réparties de façon symétrique sur sa surface destinée à venir en contact avec la chape.

Dans une réalisation, les nervures sont formées par un matériau élastique et déformable.

L'invention concerne également un frein à disque muni d'un étrier monté coulissant dans une chape au moyen de colonnettes fixées rigidement à l'étrier, un manchon étant destiné à recevoir une de ces colonnettes dans un alésage de la chape, le manchon présentant des nervures sur une surface destinée à venir en contact avec la chape de telle sorte que ces nervures se déforment afin d'accroître cette surface de contact lorsque le manchon est compressé par une activation du frein.

D'autres caractéristiques et avantages de l'invention apparaîtront à la lumière de la description d'une réalisation de l'invention effectuée ci-dessous, à titre illustratif et non limitatif, en faisant référence aux figures ci-jointes sur lesquelles :
- la figure 1 représente un étrier de frein à disque muni d'un manchon conforme à l'invention,
- la figure 2 est une vue en coupe du frein à disque décrit à la figure 1,
- les figures 3, 4 et 5 sont différentes vues d'un manchon conforme à l'invention.

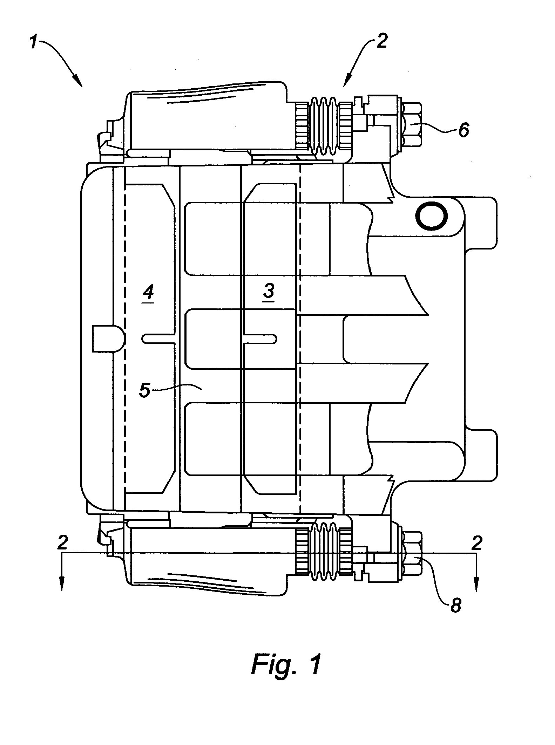

La figure 1 représente un étrier 1 de frein à disque comprenant une chape 2 coulissante munie de deux plaquettes 3 interne et 4 externe permettant de serrer le disque 5 solidaire d'une roue comme précédemment décrit.

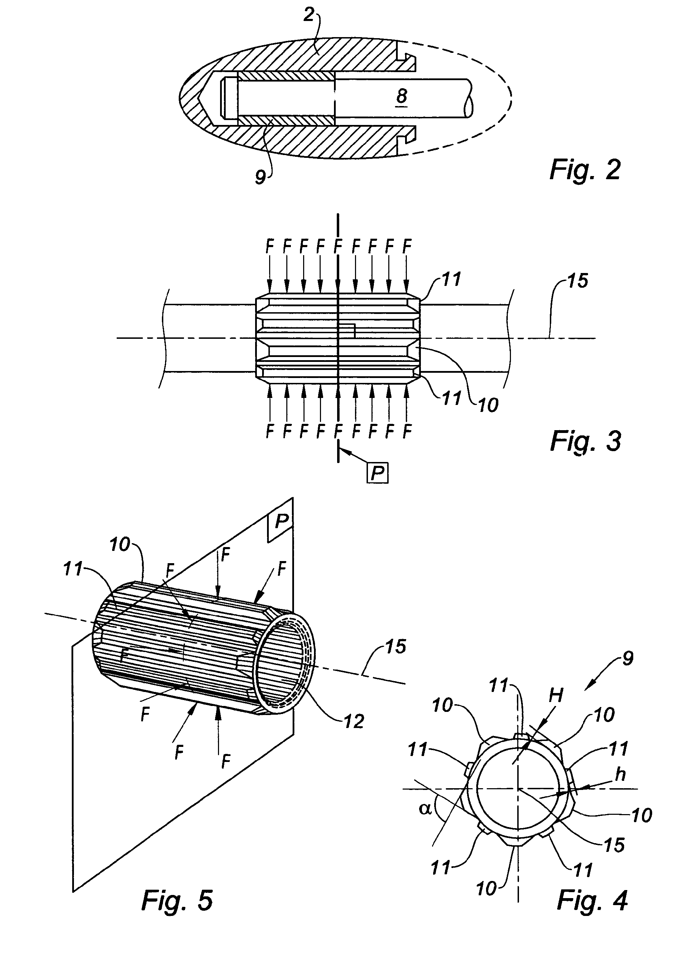

Afin de guider le coulissement de l'étrier par rapport aux colonnettes 6 et 8 de l'étrier 1, des manchons ou « bushing » en anglais sont agencés entre la chape 2 et chaque colonnette 6 ou 8 comme montré sur la figure 2.

Sur cette figure 2 est représenté un manchon 9 associé à la colonnette 8 selon une représentation en coupe de cette dernière correspondant à l'axe 2-2 de la figure 1.

Le manchon 9, conforme à l'invention, présente une surface de contact avec la chape 2 accrue lorsque le frein est activé.

Grâce à cette surface de contacte accrue, le manchon peut amortir de façon satisfaisante les vibrations basses fréquences qui peuvent générer des nuisances sonores lors du fonctionnement du frein.

Par ailleurs, cette surface de contact est ensuite réduite lorsque le frein est relâché ce qui permet de réduire l'effort de coulissement de la colonnette. Ainsi, le retour du frein à une position de repos s'effectue dans un temps satisfaisant qui limite notamment l'usure des plaquettes de frein.

Afin d'obtenir ces variations de la surface de contact entre le manchon 9 et la chape 2, ce dernier présente des nervures 10 ou 11 (figure 3) longitudinales sur sa surface destinée à venir en contact avec la chape, tandis que sa surface interne destinée à être au contact avec la colonnette 8 est homogène et lisse comme montré sur la figure 5.

Ces figures 3 et 5 permettent également d'illustrer la forme trapézoïdale des nervures qui sont allongées selon l'axe 15 longitudinal du manchon.

Dans cette réalisation, des nervures 10 principales ont des dimensions supérieures aux dimensions de nervures 11 secondaires ou intermédiaires comme montré sur la figure 4. Par exemple, la hauteur H des nervures 10 principales, mesurée selon le diamètre du manchon 9, est pratiquement double à la hauteur h des nervures 11 secondaires ainsi mesurées.

Pratiquement, cette hauteur H peut être de l'ordre de 0.5 mm pour une application classique dans un frein à disque connu.

Pour une telle application, le manchon décrit présente cinq nervures principales 10, deux nervures principales étant équidistantes d'une nervure secondaire 11 interposée entre ces nervures principales.

Comme montré sur la figure 5, l'angle α formé par les plans tangents aux parois des nervures est de l'ordre de 90°.

Les nervures sont formées par un matériel élastique permettant leur compression de telle sorte que, lorsque le frein est activé, les nervures 10 sont compressées par l'effort de la colonnette sur le manchon.

Le manchon offre une force de réaction F à cette compression qui est notamment fonction de sa surface de contact avec le manchon.

Lorsque cette compression atteint un certain seuil, la compression des nervures principales 10 est telle que leur hauteur H diminue et les nervures secondaires 11 entrent également en contact avec la chape.

A cet instant, la surface de contact du manchon avec la chape est sensiblement accrue, ce qui augmente également l'amortissement des basses vibrations effectuées par le manchon 9.

Lorsque le frein est relâché, la compression exercée sur le manchon diminue et les nervures peuvent reprendre leur forme, notamment leur hauteur H. Dans ce cas, seules les nervures principales 10 sont en contact avec la chape ce qui limite la surface de contact entre cette dernière et le manchon, facilitant ainsi le retour de la chape dans une position de repos.

La présente invention est susceptible de nombreuses variantes. Notamment, la disposition des nervures sur la surface du manchon peut varier en fonction des applications de l'invention.

## Revendications

1. Manchon (9) pour frein à disque muni d'un étrier (1) monté coulissant dans une chape (2) au moyen de colonnettes (6,8) fixées rigidement à l'étrier (1), ce manchon (9) étant destiné à recevoir une de ces colonnettes (6,8) dans un alésage de la chape (2), le manchon (9) présentant des nervures (10, 11) sur une surface destinée à venir en contact avec la chape de telle sorte que ces nervures (10, 11) puissent se déformer afin d'accroître cette surface de contact lorsque le manchon (9) est compressé par une activation du frein, et présentant une forme sensiblement cylindrique selon un axe longitudinal (15), **caractérisé en ce que** les nervures (10, 11) ont des formes trapézoïdales allongées selon l'axe longitudinal (15) du manchon (9) et **en ce qu'**il présente différentes nervures (10, 11) ayant différentes hauteurs (H) mesurées selon une direction perpendiculaire à l'axe longitudinal (15) du manchon (9).

2. Manchon (9) selon la revendication 1 **caractérisé en ce qu'**il comprend au moins cinq nervures (10, 11) de même hauteur réparties de façon symétrique sur sa surface destinée à venir en contact avec la chape.

3. Manchon (9) selon l'une des revendications précédentes **caractérisé en ce que** les nervures (10, 11) sont formées par un matériau élastique et déformable.

4. Frein à disque muni d'un étrier (1) monté coulissant dans une chape (2) au moyen de colonnettes (6,8) fixées rigidement à l'étrier (1), un manchon selon l'une quelconque des revendications précédentes(9)étant destiné à recevoir une de ces colonnettes dans un alésage de la chape, le manchon (9) présentant des nervures (10, 11) sur une surface en contact avec la chape (2) de telle sorte que ces nervures puissent se déformer afin d'accroître cette surface de contact lorsque le manchon (9) est compressé par une activation du frein.

## Claims

1. Sleeve (9) for a disk brake fitted with a caliper (1) slidably mounted in a carrier (2) by means of pins (6, 8) fixed rigidly to the caliper (1), said sleeve (9) being designed to receive one of said pins (6, 8) in a bore of the carrier (2), the sleeve (9) having ribs (10, 11) on a surface designed to come into contact with the carrier so that said ribs (10, 11) may be deformed in order to increase said contact surface when the sleeve (9) is compressed by an activation of the brake, and having a substantially cylindrical shape along a longitudinal axis (15), **characterized in that** the said ribs (10, 11) are of trapezoidal shape extending along the longitudinal axis (15) of the sleeve (9) having different heights (H) measured in a direction perpendicular to the longitudinal axis (15) of the sleeve (9).

2. Sleeve (9) according to Claim 1, **characterized in that** it comprises at least five ribs (10, 11) of the same height distributed symmetrically over its surface designed to come into contact with the carrier.

3. Sleeve (9) according to one of the preceding claims, **characterized in that** the ribs (10, 11) are formed by a resilient and deformable material.

4. Disk brake fitted with a caliper (1) slidably mounted in a carrier (2) by means of pins (6, 8) fixed rigidly to the caliper (1), a sleeve according to any one of the preceding claims (9) being designed to receive one of said pins in a bore of the carrier, the sleeve (9) having ribs (10, 11) on a surface in contact with the carrier (2) so that said ribs may be deformed in order to increase said contact surface when the sleeve (9) is compressed by an activation of the brake.

## Patentansprüche

1. Muffe (9) für eine Scheibenbremse, die mit einem Bremssattel (1) ausgestattet ist, der mittels kleiner Stangen (6, 8), die starr am Bremssattel (1) befestigt sind, gleitend in einem Halter (2) angebracht ist, wobei diese Muffe (9) dazu vorgesehen ist, eine dieser kleinen Stangen (6, 8) in einer Aufnahme des Halters (2) aufzunehmen, wobei die Muffe (9) auf einer Fläche, die dazu vorgesehen ist, mit dem Halter in Kontakt zu gelangen, Rippen (10, 11) aufweist, so dass sich diese Rippen (10, 11) verformen können, um diese Kontaktfläche zu vergrößern, wenn die Muffe (9) durch eine Betätigung der Bremse komprimiert wird, und wobei sie eine im Wesentlichen zylindrische Form entlang einer Längsachse (15) aufweist, **dadurch gekennzeichnet, dass** die Rippen (10, 11) entlang der Längsachse (15) der Muffe (9) langgestreckte Trapezformen haben und sie unterschiedliche Rippen (10, 11) mit unterschiedlichen Höhen (H) gemessen in einer zur Längsachse (15) der Muffe (9) senkrechten Richtung aufweist.

2. Muffe (9) nach Anspruch 1, **dadurch gekennzeichnet, dass** sie mindestens fünf Rippen (10, 11) mit gleicher Höhe aufweist, die symmetrisch auf ihrer Fläche verteilt sind, die dazu vorgesehen ist, mit dem Halter in Kontakt zu gelangen.

3. Muffe (9) nach einem der vorhergehenden Ansprüche, **dadurch gekennzeichnet, dass** die Rippen (10, 11) aus einem elastischen und verformbaren Material hergestellt sind.

4. Scheibenbremse, die mit einem Bremssattel (1) ausgestattet ist, der mittels kleiner Stangen (6, 8), die starr am Bremssattel (1) befestigt sind, gleitend in einem Halter (2) angebracht ist, wobei eine Muffe (9) nach einem der vorhergehenden Ansprüche dazu vorgesehen ist, eine dieser kleinen Stangen in einer Bohrung des Halters aufzunehmen, wobei die Muffe (9) auf einer Kontaktfläche mit dem Halter (2) Rippen (10, 11) aufweist, so dass sich diese Rippen verformen können, um diese Kontaktfläche zu vergrößern, wenn die Muffe (9) durch eine Betätigung der Bremse komprimiert wird.
